# EUROPÄISCHE PATENTSCHRIFT

(11) **EP 1 157 587 B1**
(45) Veröffentlichungstag und Bekanntmachung des Hinweises auf die Patenterteilung: **30.01.2008**
(21) Anmeldenummer: 00920376.1
(22) Anmeldetag: 10.03.2000
(51) Int. Cl.: H04Q 11/04, H04L 12/64

(54) **VERFAHREN ZUR DATENÜBERMITTLUNG ÜBER EIN PAKET-ORIENTIERTES KOMMUNIKATIONSNETZ**
METHOD OF TRANSMITTING DATA VIA A PACKET-ORIENTED COMMUNICATIONS NETWORK
PROCEDE DE TRANSMISSION DE DONNEES PAR L'INTERMEDIAIRE D'UN RESEAU DE COMMUNICATION ORIENTE PAQUETS

(30) Priorität: 11.03.1999 DE 19910888
(43) Veröffentlichungstag der Anmeldung: 28.11.2001
(73) Patentinhaber: SIEMENS AKTIENGESELLSCHAFT, 80333 München (DE)
(72) Erfinder: STÖCKL, Werner, D-82065 Baierbrunn (DE); HÜNLICH, Klaus, D-85467 Neuching (DE)
(86) Internationale Anmeldenummer: PCT/DE2000/000761
(87) Internationale Veröffentlichungsnummer: WO 2000/054545

(56) Entgegenhaltungen:
- EP-A- 0 859 533
- DE-A- 19 604 245
- US-A- 5 761 197
- DAIL J E ET AL: "ADAPTIVE DIGITAL ACCESS PROTOCOL: A MAC PROTOCOL FOR MULTISERVICE BROADBAND ACCESS NETWORKS" IEEE COMMUNICATIONS MAGAZINE,US,IEEE SERVICE CENTER. PISCATAWAY, N.J, Bd. 34, Nr. 3, 1. März 1996 (1996-03-01), Seiten 104-112, XP000557382 ISSN: 0163-6804

## Beschreibung

Die Erfindung betrifft ein Verfahren zur Datenübermittlung zwischen zwei Kommunikationseinrichtungen über ein paket-orientiertes Kommunikationsnetz gemäß dem Oberbegriff des Patentanspruchs 1. Insbesondere betrifft die Erfindung ein Übertragungssystem zur Übertragung von zeitschlitz-orientierten Daten zwischen einer Vermittlungsabschlußeinrichtung - in der Literatur häufig mit 'Exchange Termination' ET bezeichnet - und einem Leitungsabschluß - in der Literatur häufig mit 'Line Termination' LT bezeichnet. Gemäß der Terminologie des Standards ITU-T G.960 (3/93), "access digital section for ISDN basic rate access" (International Telecommunication Union), insbesondere der Seiten 2 und 3, betrifft die Erfindung demnach eine Datenübertragung am sogenannten V-Referenzpunkt.

Ein Übertragungssystem zur Übertragung von zeitschlitz-orientierten Daten zwischen einer Vermittlungsabschlußeinrichtung und einem Leitungsabschluß ist üblicherweise Teil eines, eine Vermittlungseinrichtung und Teilnehmeranschlußeinrichtungen aufweisenden Kommunikationssystems. Die Teilnehmeranschlußeinrichtungen weisen dabei Teilnehmerschnittstellen zum Anschluß von Kommunikationsendgeräten an das Kommunikationssystem auf. Die Teilnehmeranschlußeinrichtungen sind gemäß dem Standard ITU-T G.960 über einen Leitungsabschluß und eine Vermittlungsabschlußeinrichtung mit der Vermittlungseinrichtung des Kommunikationssystems verbunden. Ein derartiges Kommunikationssystem dient dazu, schmalbandige Kommunikationsverbindungen zwischen an den Teilnehmeranschlußeinrichtungen angeschlossenen Kommunikationsendgeräten auf- bzw. abzubauen und eine schmalbandige Kommunikation - beispielsweise eine Sprach- oder Datenkommunikation - zwischen den Kommunikationsendgeräten zu ermöglichen.

In modernen Kommunikationssystemen erfolgt eine Datenübertragung zwischen der Vermittlungsabschlußeinrichtung und dem Leitungsabschluß dabei üblicherweise auf Basis des zeitschlitz-orientierten, aus einer periodischen Folge von kanalindividuellen Informationssegmenten - im weiteren als Zeitmultiplexkanal bezeichnet - gebildeten Datenformats IOM-2 (ISDN Oriented Modular Interface). Hierbei ist in der Regel jeder Teilnehmerschnittstelle einer Teilnehmeranschlußeinrichtung jeweils ein Zeitmultiplexkanal zugeordnet.

In der modernen Kommunikationstechnik besteht jedoch zunehmend der Bedarf an einer breitbandigen Übertragung von Informationen, wie beispielsweise von Fest- und Bewegtbildern bei Bildtelefonanwendungen bzw. von großen Datenmengen im sogenannten 'Internet'. Hierdurch steigt die Bedeutung von Übertragungstechniken für hohe und variable Datenübertragungsraten (größer 100 MBit/s), die sowohl den Anforderungen der Datenübertragung (hohe Geschwindigkeit bei variabler Übertragungsbitrate) als auch den Anforderungen der Sprachdatenübertragung (Erhalt von zeitlichen Korrelationen bei einer Datenübertragung über ein Kommunikationsnetz) Rechnung tragen, um so die für die verschiedenen Zwecke derzeit existierenden separaten Kommunikationsnetze in einem Kommunikationsnetz integrieren zu können. Ein bekanntes Datenübertragungsverfahren für hohe Datengeschwindigkeiten ist der sogenannte Asynchrone Transfer Modus (ATM). Eine Datenübertragung auf Basis des Asynchronen Transfer Modus ermöglicht derzeit eine variable Übertragungsbitrate von bis zu 622 Mbit/s.

Bei dem als Asynchronen Transfer Modus (ATM) bekannten zellbasierten Datenübertragungsverfahren werden für den Datentransport Datenpakete fester Länge, sogenannte ATM-Zellen benutzt. Eine ATM-Zelle setzt sich aus einem, für den Transport einer ATM-Zelle relevante Vermittlungsdaten enthaltenden, fünf Bytes langem Zellkopf, dem sogenannten 'Header' und einem 48 Bytes langem Nutzdatenfeld, der sogenannten 'Payload' zusammen.

Eine Datenübertragung über ein ATM-basiertes Kommunikationsnetz erfolgt im allgemeinen im Rahmen von sogenannten virtuellen Pfaden bzw. in den virtuellen Pfaden enthaltenen virtuellen Kanälen. Hierzu werden bei einem Verbindungsaufbau vor Beginn der eigentlichen Nutzdatenübertragung durch Austausch von Signalisierungsinformationen Verbindungstabellen mit aus einer sogenannten Virtuellen-Kanal-Identifizierung und aus einer sogenannten Virtuellen-Pfad-Identifizierung bestehenden Vermittlungsinformation in den jeweiligen ATM-Netzknoten des ATM-basierten Kommunikationsnetzes eingerichtet. In den Verbindungstabellen ist der Virtuellen-Kanal-Identifizierung ein sogenannter VCI-Wert und der Virtuellen-Pfad-Identifizierung ein sogenannter VPI-Wert zugewiesen. Durch die in der Verbindungstabelle eines ATM-Netzknotens eingetragene Vermittlungsinformation ist festgelegt, wie die virtuellen Pfade bzw. in den virtuellen Pfaden enthaltene virtuelle Kanäle der an dem ATM-Netzknoten ein- und ausgehenden Verbindungen durch die Signalisierung einander zugeordnet sind, d.h. welcher Eingang mit welchem Ausgang des ATM-Netzknotens vermittlungstechnisch verknüpft ist. Über diese virtuellen Verbindungen (virtuellen Pfade und virtuellen Kanäle) übermittelte ATM-Zellen weisen im Zellkopf im wesentlichen aus einem VPI-Wert und einem VCI-Wert bestehende Vermittlungsdaten auf. Am Eingang eines ATM-Netzknotens werden die ATM-Zellkopf-Daten bearbeitet, d.h. die darin angeordneten Vermittlungsdaten erfaßt und bewertet. Anschließend werden die ATM-Zellen durch den ATM-Netzknoten anhand der in der Verbindungstabelle gespeicherten Vermittlungsinformation an einen, ein bestimmtes Ziel repräsentierenden Ausgang des ATM-Netzknotens durchgeschaltet.

In der deutschen Patentanmeldung mit dem amtlichen Kennzeichen 198 45 038.9 wurde bereits ein Übertragungssystem zwischen einer Vermittlungsabschlußeinrichtung und einem Leitungsabschluß vorgeschlagen, bei dem die Datenübertragung über ein ATM-basiertes Kommunikationsnetz realisiert wird. Hierbei werden Teilnehmerschnittstellen zum Anschluß von Kommunikationsendgeräten durch an das ATM-basierte Kommunikationsnetz angeschlossene ATM-Übergabeeinheiten - in der Literatur häufig mit ATM-Hub bezeichnet - zur Verfügung gestellt. Die Vermittlungsabschlußeinrichtung des Kommunikationssystems und der durch die ATM-Übergabeeinheit realisierte Leitungsabschluß weisen dabei jeweils eine ATM-Anschlußeinheit auf, über die einerseits eine Verbindung mit dem ATM-basierten Kommunikationsnetz realisiert wird und andererseits eine bidirektionale Umwandlung zwischen dem üblicherweise für eine Datenübermittlung zwischen der Vermittlungsabschlußeinrichtung und dem Leitungsabschluß vorgesehenen zeitschlitz-orientierten IOM-2-Datenformat und dem paket-orientierten ATM-Datenformat erfolgt.

Die bidirektionale Umwandlung zwischen dem zeitschlitz-orientierte IOM-2-Datenformat und dem paket-orientierten ATM-Datenformat erfolgt dabei gemäß zweier unterschiedlicher Umwandlungsmodi. Gemäß des ersten Umwandlungsmodus werden basierend auf der Vorschrift CES 2.0 des ATM-Forums die zeitschlitz-orientierten Daten byteweise in ATM-Zellen gemäß der ersten ATM-Anpassungsschicht AAL1 verpackt. Die ATM-Anpassungsschicht AAL (ATM Adaption Layer) dient dabei einer Anpassung des ATM-Datenformats (entspricht der Schicht 2 des OSI-Referenzmodells) auf die Vermittlungsschicht (Schicht 3) des OSI-Referenzmodells (Open System Interconnection). Gemäß des zweiten Umwandlungsmodus werden die zeitschlitz-orientierten Daten byteweise in, nach der zweiten ATM-Anpassungsschicht AAL2 substrukturierte ATM-Zellen verpackt.

Des weiteren ist aus der deutschen Offenlegungsschrift DE 196 04 245 A1 ebenfalls ein Verfahren zur Datenübermittlung zwischen zwei Kommunikationseinrichtungen über ein paket-orientiertes Kommunikationsnetz bekannt, wobei für eine Datenübermittlung zwischen den Kommunikationseinrichtungen das zeitschlitz-orientierte IOM-2-Datenformat eingerichtet ist. Hierbei werden die Informationssegmente gemeinsam in einer ATM-Zelle über das paket-orientierte Kommunikationsnetz übermittelt.

Aus Dail J. E. et. al.: "Adaptive Digital Access Protocol: A MAC Protocol for Multiservice Broadband Access Networks" IEEE Communications Magazine, US, IEEE Service Center, Piscataway, New York, Bd. 34, Nr. 3, 1. März 1996, XP000557382 ISSN: 0163-6804, insbesondere der Seiten 104 - 112, ist ebenfalls ein Verfahren zur Datenübermittlung zwischen zwei Kommunikationseinrichtungen über ein paket-orientiertes Kommunikationsnetz bekannt, wobei Signalisierungsinformationen in ersten Datenpaketen und Nutzinformationen in zweiten Datenpaketen über das paket-orientierte Kommunikationsnetz übertragen werden.

Der vorliegenden Erfindung liegt die Aufgabe zugrunde, ein alternatives Verfahren anzugeben, durch welches eine bidirektionale Datenübertragung zwischen den Kommunikationsendgeräten und der Vermittlungsanlage erfolgen kann.

Gelöst wird die Aufgabe ausgehend von den Merkmalen des Oberbegriffs des Patentanspruchs 1 durch dessen kennzeichnende Merkmale.

Zum besseren Verständnis der Funktionsweise einer Übertragung von zeitschlitz-orientierten Daten zwischen einer Vermittlungsabschlußeinrichtung und einem Leitungsabschluß erscheint es erforderlich zunächst noch einmal auf bekannte Prinzipien näher einzugehen.

Eine Übertragung der zeitschlitz-orientierten Daten zwischen der Vermittlungsabschlußeinrichtung und dem Leitungsabschluß erfolgt üblicherweise auf Basis des, z.B. aus der Produktschrift "ICs for Communications - IOM®-2 Interface Reference Guide" der Firma Siemens, München, 3/91, Bestell-Nr. B115-H6397-X-X-7600, insbesondere der Seiten 6 bis 12, bekannten Datenformats IOM-2.

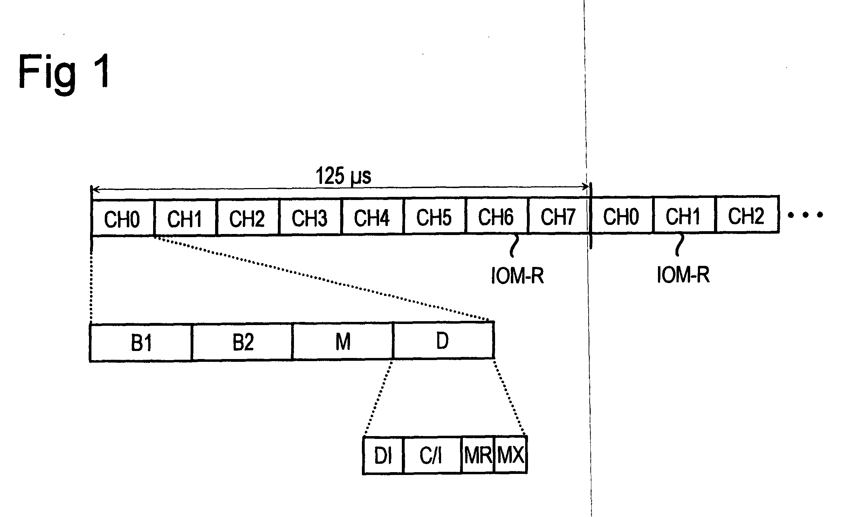

Einem schnelleren Verständnis der Zusammenhänge dient Fig.1, die eine schematische Darstellung des IOM-2-Datenformats zeigt, gemäß dem Zeitmultiplexrahmen IOM-R mit einer Länge von 125µs periodisch übertragen werden. Ein derartiger Zeitmultiplexrahmen IOM-R ist in Zeitmultiplexkanäle oder Sub-Rahmen CH0,..,CH7 - in der Literatur auch häufig einfach mit 'Channel' bezeichnet - aufgeteilt. Die Sub-Rahmen CH0,.., CH7 sind wiederum jeweils in zwei 8 Bit lange Nutzdatenkanäle B1, B2, in einen 8 Bit langen Monitorkanal M, in einen 2 Bit langen Signalisierungskanal DI, in einen 4 Bit langen Statuskanal C/I (Command / Indicate) und in zwei jeweils 1 Bit lange Monitorstatuskanäle MR, MX untergliedert. Der Signalisierungskanal DI, der Statuskanal C/I und die beiden Monitorstatuskanäle MR, MX werden in der Literatur üblicherweise zusammengefaßt als Steuerkanal D bezeichnet.

Über die Nutzdatenkanäle B1, B2 erfolgt eine Übermittlung von Nutzdateninformation zwischen an einen sogenannten IOM-2-Bus angeschlossenen Einrichtungen mit einer Übertragungsbitrate von jeweils 64 kBit/s. Über den Signalisierungskanal DI erfolgt eine Übermittlung von der Nutzdateninformation zugeordneter Steuerinformation mit einer Übertragungsbitrate von 16 kBit/s. Der Monitorkanal dient unter anderem zur Konfigurierung von an einem IOM-2-Bus angeschlossenen Einrichtungen ausgehend von einem sogenannten 'IOM-2-Busmaster'. Über die Monitorstatuskanäle MR (Monitor Read) und MX (Monitor Transmit) wird dabei festgelegt, ob Daten von einer an den IOM-2-Bus angeschlossenen Einrichtung von IOM-2-Bus gelesen (MR = 1, MX = 0) oder auf den IOM-2-Bus ausgegeben (MR = 0, MX = 1) werden. Über den Statuskanal C/I wird Information über, im Rahmen einer Datenübermittlung zwischen zwei an einem IOM-2-Bus angeschlossenen Einrichtungen bestehenden Echtzeitanforderungen ausgetauscht.

Bei einer Datenübertragung über ein ATM-basiertes Kommunikationsnetz mittels ATM-Zellen gemäß der ersten ATM-Anpassungsschicht AAL1 ist lediglich eine konstante Übertragungsbitrate zwischen der Vermittlungsanlage und einer ATM-Übergabeeinheit realisierbar, da unabhängig davon, ob tatsächlich Daten übertragen werden oder nicht, alle Kanalinformationen - Informationen der beiden Nutzdatenkanäle B1, B2, des Monitorkanals M und des Steuerkanals D - des IOM-2-Datenformats übermittelt werden müssen. Bei einer Datenübertragung über das ATM-basierte Kommunikationsnetz mittels ATM-Zellen gemäß der zweiten ATM-Anpassungsschicht AAL2 ist dagegen eine variable Übertragungsbitrate zwischen der Vermittlungsanlage und einer ATM-Übergabeeinheit realisierbar, da die Möglichkeit besteht, nur einzelne, aktuell Daten übertragende Kanalinformationen zu übermitteln. Bausteine, die eine bidirektionale Umwandlung zwischen einem zeitschlitz-orientierten IOM-2-Datenformat und dem ATM-Datenformat gemäß der zweiten ATM-Anpassungsschicht AAL2 realisieren sind zur Zeit aus Kostengründen jedoch noch nicht wirtschaftlich einsetzbar.

Ein wesentlicher Vorteil des erfindungsgemäßen Verfahrens besteht nun darin, daß das Verfahren auf einfache Weise in bereits bestehende Systeme implementiert werden kann ohne Veränderungen an der Schnittstelle zwischen Vermittlungsanlage und ATM-Übergabeeinheit - gemäß der Terminologie des Standards ITU-T G.960 mit V-Referenzpunkt bezeichnet - vornehmen zu müssen.

Ein weiterer Vorteil des erfindungsgemäßen Verfahrens besteht darin, daß durch eine Übermittlung der, für eine Übermittlung von Signalisierungsinformation - entspricht den über den Signalisierungskanal des IOM-2-Datenformats übermittelten Daten - vorgesehenen Informationssegmente und der, für eine Übermittlung von Nutzdateninformation - entspricht den über die Nutzdatenkanäle des IOM-2-Datenformats übermittelten Daten - vorgesehenen Informationssegmenten in separaten Datenzellen, eine Übermittlung von Nutzdateninformation über das paketorientierte Kommunikationsnetz nur in Fällen erfolgt, in denen tatsächlich Nutzdaten in den dafür vorgesehen Informationssegmenten zu übermitteln sind.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß für eine Datenübermittlung über das ATM-basierte Kommunikationsnetz mittels ATM-Zellen gemäß der fünften ATM-Anpassungsschicht AAL5 bereits vorhandene AAL5-Bausteine wirtschaftlich einsetzbar sind, so daß keine neuen Entwicklungen nötig sind.

Ein Ausführungsbeispiel der Erfindung wird im folgenden anhand der Zeichnung näher erläutert.

Dabei zeigen:
- Fig. 2:: ein Strukturbild zur schematischen Darstellung der am erfindungsgemäßen Verfahren beteiligten wesentlichen Funktionseinheiten;
- Fig. 3:: ein Strukturbild zur schematischen Darstellung der für eine Datenübermittlung über ein ATM-basiertes Kommunikationsnetz eingerichteten virtuellen Kanäle gemäß eines ersten Übertragungsmodus;
- Fig. 4:: ein Strukturbild zur schematischen Darstellung der für eine Datenübermittlung über das ATM-basierte Kommunikationsnetz eingerichteten virtuellen Kanäle gemäß eines zweiten Übertragungsmodus.

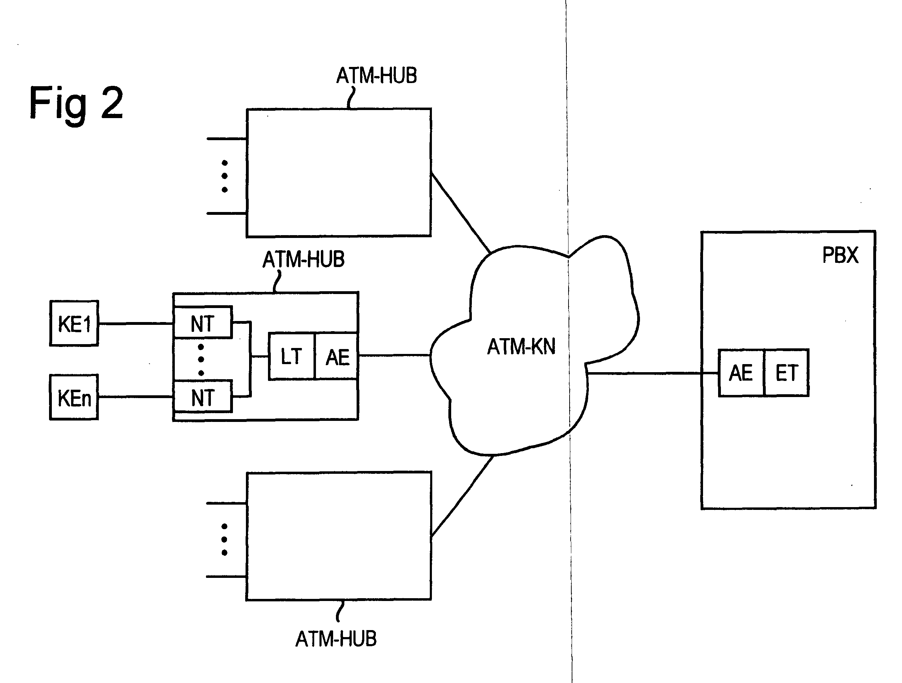

Fig. 2 zeigt eine schematische Darstellung einer Vermittlungsanlage PBX (Privat Branche Exchange) mit einer darin angeordneten Vermittlungsabschlußeinheit ET (Exchange Termination). Die Vermittlungsabschlußeinheit ET ist über eine Anschlußeinheit AE mit einem ATM-basierten Kommunikationsnetz ATM-KN verbunden. An das ATM-basierte Kommunikationsnetz ATM-KN sind des weiteren ATM-Übergabeeinheiten ATM-HUB angeschlossen, welche Teilnehmerschnittstellen zum Anschluß von Kommunikationsendgeräten an das ATM-basierte Kommunikationsnetz ATM-KN aufweisen. Beispielhaft sind Kommunikationsendgeräte KE1,...,KEn dargestellt.

Über eine ATM-Übergabeeinheit ATM-HUB werden üblicherweise mittels S₀-Schnittstellen ISDN-Kommunikationsendgeräte (Integrated Services Digital Network) oder mittels daraus abgeleiteten Schnittstellen, wie beispielsweise Uₚ₀-Schnittstellen digitale Kommunikationsendgeräte mit dem ATM-basierten Kommunikationsnetz ATM-KN verbunden. Allgemein umfassen eine U_{P0}- bzw. eine S₀-Schnittstelle zum einen 2 Nutzdatenkanäle, welche als ISDN-orientierte B-Kanäle mit einer Übertragungsbitrate von jeweils 64 kBit/s ausgestaltet sind und zum anderen einen Signalisierungskanal, welcher als ISDN-orientierter D-Kanal mit einer Übertragungsbitrate von 16 kBit/s ausgestaltet ist. Des weiteren besteht generell die Möglichkeit über sogenannte a/b-Schnittstellen analoge Kommunikationsendgeräte - beispielsweise ein Facsimile-Endgerät - an das ATM-basierte Kommunikationsnetz ATM-KN anzuschließen.

Ein Anschluß der Kommunikationsendgeräte KE1,...,KEn an die ATM-Übergabeeinheit ATM-HUB, d.h. die Bereitstellung der Teilnehmerschnittstellen erfolgt durch die ATM-Übergabeeinheit ATM-HUB gemäß der Terminologie des Standards ITU-T G.960 durch Netzabschlüsse NT (Network Termination). Gemäß des Standards ITU-T G.960 (International Telecommunication Union) sind die Netzabschlüsse NT einer ATM-Übergabeeinheit ATM-HUB über einen in der ATM-Übergabeeinheit ATM-HUB angeordneten Leitungsabschluß LT mit der Vermittlungsabschlußeinrichtung ET der Vermittlungsanlage PBX verbunden. Für eine Datenübermittlung über das ATM-basierte Kommunikationsnetz ATM-KN ist der Leitungsabschluß LT - entsprechend der Vermittlungsabschlußeinrichtung ET der Vermittlungsanlage PBX - über eine Anschlußeinheit AE mit dem ATM-basierten Kommunikationsnetz ATM-KN verbunden.

Eine Datenübertragung über das ATM-basierte Kommunikationsnetz ATM-KN kann gemäß zweier unterschiedlicher Übertragungsmodi erfolgen, die im folgenden näher beschrieben werden.

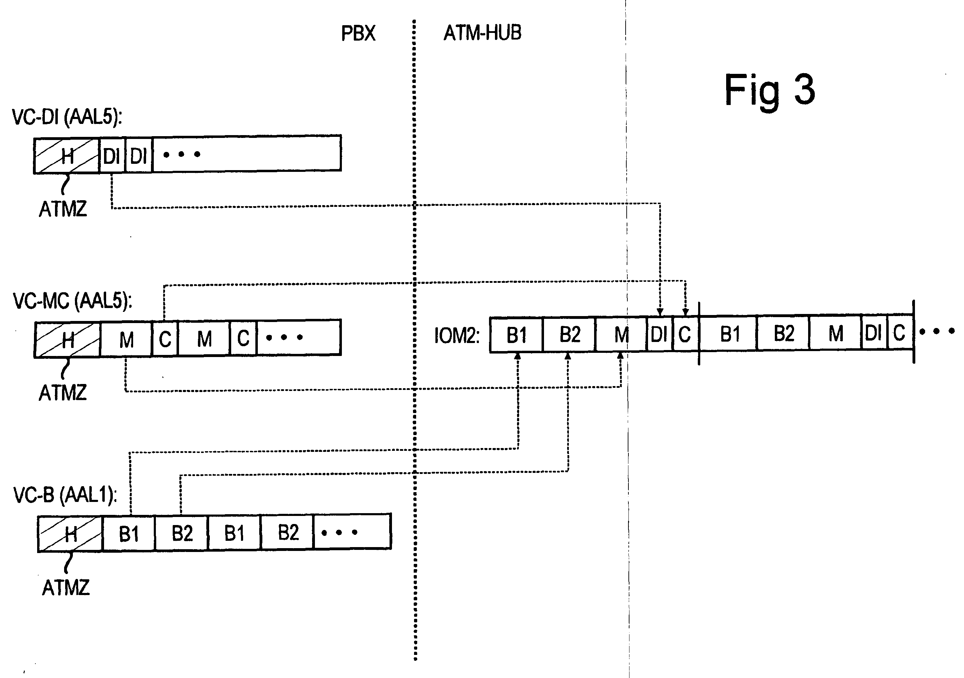

Fig. 3 zeigt in einer schematischen Darstellung die für eine Datenübermittlung über das ATM-basierte Kommunikationsnetz ATM-KN eingerichteten virtuellen Verbindungen - in der Literatur häufig mit 'Virtual Connection' VC bezeichnet - gemäß des ersten Übertragungsmodus. Bei einer Datenübertragung über das ATM-basierte Kommunikationsnetz ATM-KN gemäß des ersten Übertragungsmodus werden die von einer - nicht dargestellten - Signalisierungseinheit der Vermittlungsanlage PBX bereitgestellten Signalisierungsinformationen - entsprechen den im Rahmen des Signalisierungskanals DI des IOM-2-Datenformats zu übermittelnden Daten - über eine, ausschließlich dafür vorgesehene virtuelle Verbindung VC-DI über das ATM-basierte Kommunikationsnetz ATM-KN übermittelt. Die virtuelle Verbindung VC-DI kann dabei eine, aktuell für die Übermittlung der Signalisierungsinformation aufgebaute Verbindung oder alternativ eine im ATM-basierten Kommunikationsnetz ATM-KN eingerichtete Festverbindung mit einer administrativ voreingestellten Übertragungsbitrate von beispielsweise 16 kBit/s zwischen der Vermittlungsanlage PBX und der ATM-Übergabeeinheit ATM-HUB sein.

Eine Übermittlung der Signalisierungsinformation über die virtuelle Verbindung VC-DI erfolgt mittels ATM-Zellen ATMZ gemäß der fünften ATM-Anpassungsschicht AAL5. Eine ATM-Zelle ATMZ setzt sich allgemein aus einem, für den Transport einer ATM-Zelle ATMZ relevante Vermittlungsdaten enthaltenden, fünf Bytes langem Zellkopf H - in der Literatur häufig als 'Header' bezeichnet - und einem 48 Bytes langem Nutzdatenfeld - in der Literatur häufig als 'Payload' bezeichnet - zusammen. Durch die Übermittlung der Signalisierungsinformation mittels ATM-Zellen ATMZ gemäß der fünften ATM-Anpassungsschicht AAL5 ist eine variable Übertragungsbitrate zwischen der Vermittlungsanlage PBX und der ATM-Übergabeeinheit ATM-HUB über das ATM-basierte Kommunikationsnetz ATM-KN möglich. Die ATM-Anpassungsschicht AAL (ATM Adaption Layer) dient dabei einer Anpassung des ATM-Zellformats (Schicht 2 des OSI-Referenzmodells) auf die Vermittlungsschicht (Schicht 3) des OSI-Referenzmodells (Open System Interconnection).

Durch eine Übermittlung der Signalisierungsinformation über eine virtuelle Verbindung VC-DI mit variabler Übertragungsbitrate werden dem ATM-basierten Kommunikationsnetz ATM-KN auch in Fällen, in denen eine Übermittlung der Signalisierungsinformation über eine im ATM-basierten Kommunikationsnetz ATM-KN eingerichtete Festverbindung zwischen der Vermittlungsanlage PBX und der ATM-Übergabeeinheit ATM-HUB erfolgt nur dann Übertragungsressourcen entzogen, wenn aktuell Signalisierungsinformation über das ATM-basierte Kommunikationsnetz ATM-KN übermittelt wird.

Die von einer - nicht dargestellten - Steuer-Einheit der Kommunikationsanlage PBX bereitgestellte IOM-2-Datenformatsspezifische Information - entsprechen den im Rahmen des Monitorkanals M, des Statuskanals C/I und der Monitorstatuskanäle MR, MX des IOM-2-Datenformats zu übermittelnden Daten - werden analog zur Signalisierungsinformation über eine, ausschließlich dafür vorgesehene virtuelle Verbindung VC-MC über das ATM-basierte Kommunikationsnetz ATM-KN übermittelt. Zur besseren Übersichtlichkeit sind in der Figur die im Rahmen des Statuskanals C/I und der Monitorstatuskanäle MR, MX des IOM-2-Datenformats zu übermittelnden Informationen kurz unter der Bezeichnung C zusammengefaßt. Eine Übermittlung der IOM-2-Datenformatsspezifischen Information über die virtuelle Verbindung VC-MC erfolgt ebenfalls mittels ATM-Zellen ATMZ gemäß der fünften ATM-Anpassungsschicht AAL5.

Eine Übermittlung der Nutzdateninformation - entspricht der im Rahmen der Nutzdatenkanäle B1, B2 des IOM-2-Datenformats - zu übermittelnden Daten erfolgt über eine virtuelle Verbindung VC-B mittels ATM-Zellen ATMZ gemäß der ersten ATM-Anpassungsschicht AAL1. Hierbei kann je nach Bandbreitenbedarf der an einer ATM-Übergabeeinheit ATM-HUB angeschlossenen Kommunikationsendgeräte KE1,...,KEn Nutzdateninformation nur eines Nutzdatenkanals oder mehrerer Nutzdatenkanäle zusammengefaßt über die virtuelle Verbindung VC-B übermittelt werden. Auf diese Weise können über die virtuelle Verbindung VC-B Übertragungsbitraten von ganzzahligen Vielfachen von 64 kBit/s realisiert werden. In der Figur wird beispielhaft Nutzdateninformation zweier Nutzdatenkanäle B1, B2 über die virtuelle Verbindung VC-B mit einer daraus resultierenden Übertragungsbitrate von 128 kBit/s übertragen.

Die im Rahmen der virtuellen Verbindungen VC-DI, VC-MC, VC-B übermittelten Daten werden in der ATM-Übergabeeinheit ATM-HUB wie in der Figur dargestellt in den IOM-2-Datenstrom eingefügt. Werden aktuell keine Daten übermittelt, werden entsprechend Leerdaten in den IOM-2-Datenstrom eingefügt. Eine Datenübermittlung ausgehend von der ATM-Übergabeeinheit ATM-HUB zur Vermittlungsanlage PBX erfolgt analog zum beschriebenen Verfahren in umgekehrter Richtung.

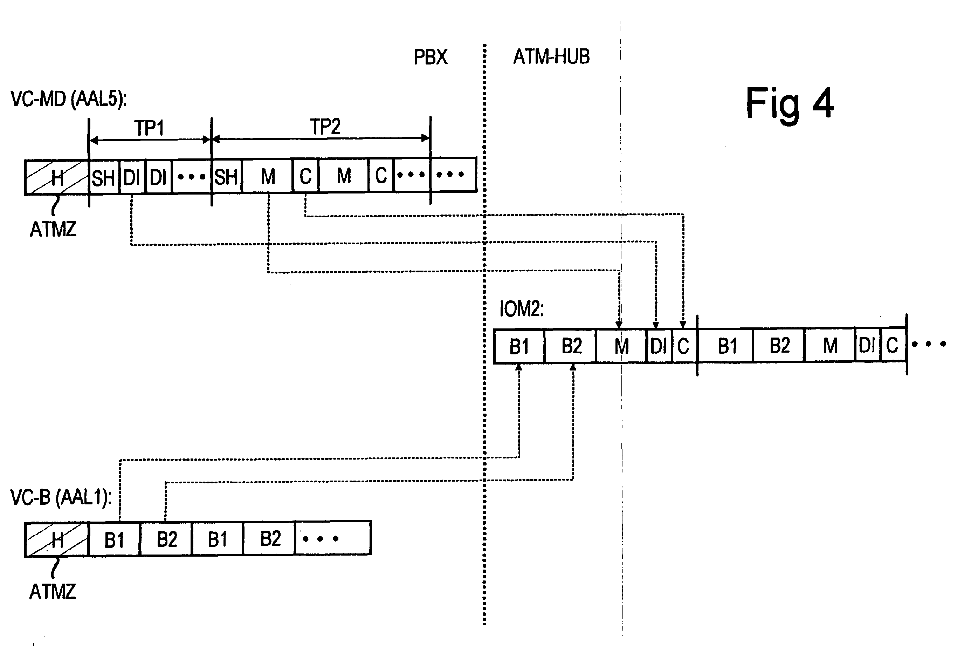

Fig. 4 zeigt in einer schematischen Darstellung die für eine Datenübermittlung über das ATM-basierte Kommunikationsnetz ATM-KN eingerichteten virtuellen Verbindungen gemäß des zweiten Übertragungsmodus. Bei einer Datenübertragung über das ATM-basierte Kommunikationsnetz ATM-KN gemäß des zweiten Übertragungsmodus werden die von der Signalisierungseinheit der Vermittlungsanlage PBX bereitgestellten Signalisierungsinformationen - entsprechen den im Rahmen des Signalisierungskanals DI des IOM-2-Datenformats zu übermittelnden Daten - und die von der Steuer-Einheit der Vermittlungsanlage PBX bereitgestellte IOM-2-Datenformatsspezifische Information - entsprechen den im Rahmen des Monitorkanals M, des Statuskanals C/I und der Monitorstatuskanäle MR, MX des IOM-2-Datenformats zu übermittelnden Daten - gemeinsam über eine, ausschileßlich dafür vorgesehene virtuelle Verbindung VC-MD über das ATM-basierte Kommunikationsnetz ATM-KN mittels ATM-Zellen ATMZ gemäß der fünften Anpassungsschicht AAL5 übermittelt. Die virtuelle Verbindung VC-MD kann dabei wiederum eine, aktuell für die Übermittlung dieser Informationen aufgebaute Verbindung oder alternativ eine im ATM-basierten Kommunikationsnetz ATM-KN eingerichtete Festverbindung mit einer administrativ voreingestellten Übertragungsbitrate von beispielsweise 128 kBit/s zwischen der Vermittlungsanlage PBX und der ATM-Übergabeeinheit ATM-HUB sein.

Im Rahmen der fünften ATM-Anpassungsschicht AAL5 besteht die Möglichkeit den Nutzdatenbereich einer ATM-Zelle ATMZ in Teilpakete TP1, TP2 zu untergliedern. Im vorliegenden Ausführungsbeispiel wird die Signalisierungsinformation in einem ersten Teilpaket TP1 und die IOM-2-Datenformatsspezifische Information in einem zweiten Teilpaket TP2 übermittelt. Die Teilpakete TP1, TP2 weisen jeweils eine Teilpaket-Header SH auf, der im wesentlichen eine - nicht dargestellte - Längen-Identifizierung aufweist, durch welche die Anzahl der in einem jeweiligen Teilpaket übermittelten Datenbytes festgelegt wird.

Eine Übermittlung der Nutzdateninformation - entspricht den im Rahmen der Nutzdatenkanäle B1, B2 des IOM-2-Datenformats zu übermittelnden Daten - erfolgt analog zum ersten Übertragungsmodus über eine virtuelle Verbindung VC-B mittels ATM-Zellen ATMZ gemäß der ersten ATM-Anpassungsschicht AAL1.

Die im Rahmen der virtuellen Verbindungen VC-MD, VC-B übermittelten Daten werden in der ATM-Übergabeeinheit ATM-HUB wie in der Figur dargestellt in den IOM-2-Datenstrom eingefügt. Werden aktuell keine Daten übermittelt, werden entsprechend Leerdaten in den IOM-2-Datenstrom eingefügt. Eine Datenübermittlung ausgehend von der ATM-Übergabeeinheit ATM-HUB zur Vermittlungsanlage PBX erfolgt analog zum beschriebenen Verfahren in umgekehrter Richtung.

Durch das getrennte Übermitteln der Signalisierungsinformationen und der Nutzdateninformation über das ATM-basierte Kommunikationsnetz ATM-KN werden dem ATM-basierten Kommunikationsnetz ATM-KN nur dann Übertragungsressourcen für eine Übermittlung von im Rahmen einer Verbindung über das ATM-basierte Kommunikationsnetz ATM-KN zu übermittelnder Nutzdateninformation entzogen, wenn tatsächlich Nutzdaten übermittelt werden. So können beispielsweise im Rahmen eines Verbindungsaufbaus in einem ersten Schritt nur die, für einen Aufbau der Verbindung notwendige Signalisierungsinformation bzw. die IOM-2-Datenformatsspezifische Information über das ATM-basierte Kommunikationsnetz ATM-KN übermittelt werden und erst nachfolgend die tatsächlich zu übermittelnde Nutzdateninformation übermittelt werden.

## Patentansprüche

1. Verfahren zur Datenübermittlung zwischen zwei Kommunikationseinrichtungen über ein paket-orientiertes Kommunikationsnetz (ATM-KN),
wobei für eine Datenübermittlung zwischen den Kommunikationseinrichtungen ein zeitschlitz-orientiertes, aus einer periodischen Folge von kanalindividuellen Informationssegmenten (B1, B2, M, DI, C) gebildetes Datenformat (IOM-2) vorgesehen ist, wobei das Datenformat (IOM-2) Informationssegmente (DI) für eine Übermittlung von Signalisierungsinformation, Informationssegmente (B1, B2) für eine Übermittlung von Nutzdateninformation und Informationssegmente (M, C) für eine Übermittlung von datenformatsspezifischer Information aufweist,
**dadurch gekennzeichnet,**
**daß** die für eine Übermittlung von Signalisierungsinformation vorgesehenen Informationssegmente (DI) in ersten, die für eine Übermittlung von Nutzdateninformation vorgesehenen Informationssegmente (B1, B2) in zweiten, und die für eine Übermittlung der datenformatsspezifischen Information vorgesehenen Informationssegmente (M, C) in dritten, für eine Datenübermittlung über das paket-orientierte Kommunikationsnetz (ATM-KN) vorgesehenen Datenpaketen (ATMZ) über das paket-orientierte Kommunikationsnetz (ATM-KN) übermittelt werden.

2. Verfahren nach Anspruch 1,
**dadurch gekennzeichnet,**
**daß** die, für eine Übermittlung der datenformatsspezifischen Information vorgesehenen Informationssegmente (M, C) und die, für eine Übermittlung von Signalisierungsinformation vorgesehene Informationssegmente (DI) gemeinsamen in den ersten Datenpaketen (ATMZ) übermittelt werden.

3. Verfahren nach Anspruch 2,
**dadurch gekennzeichnet,**
**daß** die ersten Datenpakete (ATMZ) in mindestens zwei Teilpakete (TP1, TP2) untergliedert sind, wobei die, für eine Übermittlung von datenformatsspezifischer Information vorgesehenen Informationssegmente (M, C) in einem ersten Teilpaket (TP1) und die, für eine Übermittlung von Signalisierungsinformation vorgesehenen Informationssegmente (DI) in einem zweiten Teilpaket (TP2) übermittelt werden.

4. Verfahren nach Anspruch 3,
**dadurch gekennzeichnet,**
**daß** die Teilpakete (TP1, TP2) jeweils einen Zellkopf (SH) mit einer Längen-Identifizierung aufweisen, wobei durch die Längen-Identifizierung die Anzahl der in einem jeweiligen Teilpaket (TP1, TP2) übermittelten Daten festgelegt wird.

5. Verfahren nach einem der vorhergehenden Ansprüche,
**dadurch gekennzeichnet,**
**daß** das zeitschlitz-orientierte Datenformat (IOM-2) das standardisierte IOM-2-Datenformat ist.

6. Verfahren nach einem der vorhergehenden Ansprüche,
**dadurch gekennzeichnet,**
**daß** eine Datenübermittlung über das paket-orientierte Kommunikationsnetz (ATM-KN) auf Basis des ATM-Datenformats (Asynchroner Transfer Modus) erfolgt.

7. Verfahren nach Anspruch 6,
**dadurch gekennzeichnet,**
**daß** die, für eine Übermittlung von Signalisierungsinformation vorgesehenen Informationssegmente (DI) in, gemäß einer als fünfte ATM-Anpassungsschicht AAL5 bekannten Vereinbarung ausgestalteten Datenpaketen (ATMZ) über das paket-orientierte Kommunikationsnetz (ATM-KN) übermittelt werden.

8. Verfahren nach Anspruch 6 oder 7,
**dadurch gekennzeichnet,**
**daß** die, für eine Übermittlung von Nutzdateninformation vorgesehenen Informationssegmente (B1, B2) in, gemäß einer als erste ATM-Anpassungsschicht AAL1 bekannten Vereinbarung ausgestalteten Datenpaketen (ATMZ) über das paket-orientierte Kommunikationsnetz (ATM-KN) übermittelt werden.

9. Verfahren nach einem der vorhergehenden Ansprüche,
**dadurch gekennzeichnet,**
**daß** die, für eine Übermittlung von Signalisierungsinformation vorgesehenen Informationssegmente (DI) über eine bestehende Festverbindung des paket-orientierten Kommunikationsnetzes (ATM-KN) übermittelt werden.

10. Verfahren nach einem der Ansprüche 1 bis 8,
**dadurch gekennzeichnet,**
**daß** die, für eine Übermittlung von Signalisierungsinformation vorgesehenen Informationssegmente (DI) über eine, für diese Datenübermittlung individuell aufgebaute Verbindung zwischen den Kommunikationseinrichtungen über das paket-orientierte Kommunikationsnetz (ATM-KN) übermittelt werden

## Claims

1. Method for data transmission between two communications devices via a packet-oriented communications network (ATM-KN), a time-slot-oriented data format (IOM-2) formed from a periodic sequence of channel-specific information segments (B1, B2, M, DI, C) being provided for data transmission between the communications devices, where the data format (IOM-2) has information segments (DI) for transmitting the signalling information, information segments (B1, B2) for transmitting user data information and information segments (M, C) for transmitting data-format-specific information,
**characterized in that**
the information segments (DI) provided for transmitting signalling information are transmitted via the packet-oriented communications network (ATM-KN) in first information segments (B1, B2), provided for transmitting user data information, in second information segments (M, C), provided for transmitting data-format-specific information, and in third data packets (ATMZ), provided for data transmission via the packet-oriented communications network (ATM-KN).

2. Method according to Claim 1,
**characterized in that**
the information segments (M, C) provided for transmitting the data-format-specific information and the information segments (DI) provided for transmitting signalling information are transmitted together in the first data packets (ATMZ).

3. Method according to Claim 2,
**characterized in that**
the first data packets (ATMZ) are broken down into at least two subpackets (TP1, TP2), the information segments (M, C) provided for transmitting data-format-specific information being transmitted in a first subpacket (TP1), and the information segments (DI) provided for transmitting signalling information being transmitted in a second subpacket (TP2).

4. Method according to Claim 3,
**characterized in that**
the subpackets (TP1, TP2) each have a cell head (SH) with a length identifier, the length identifier stipulating the number of data items transmitted in a respective subpacket (TP1, TP2).

5. Method according to one of the previous claims,
**characterized in that**
the time-slot-oriented data format (IOM-2) is the standardized IOM-2 data format.

6. Method according to one of the previous claims,
**characterized in that**
data are transmitted via the packet-oriented communications network (ATM-KN) on the basis of the ATM data format (Asynchronous Transfer Mode).

7. Method according to Claim 6,
**characterized in that**
the information segments (DI) provided for transmitting signalling information are transmitted via the packet-oriented communications network (ATM-KN) in data packets (ATMZ) designed on the basis of an agreement known as the fifth ATM adaptation layer AAL5.

8. Method according to Claim 6 or 7,
**characterized in that**
the information segments (B1, B2) provided for transmitting user data information are transmitted via the packet-oriented communications network (ATM-KN) in data packets (ATMZ) designed on the basis of an agreement known as the first ATM adaptation layer (AAL1).

9. Method according to one of the previous claims,
**characterized in that**
the information segments (DI) provided for transmitting signalling information are transmitted via an existing fixed connection of the packet-oriented communications network (ATM-KN).

10. Method according to one of Claims 1 to 8,
**characterized in that**
the information segments (DI) provided for transmitting signalling information are transmitted via the packet-oriented communications network (ATM-KN) using a connection between the communications devices which is set up individually for this data transmission.

## Revendications

1. Procédé pour la transmission de données entre deux dispositifs de communication par l'intermédiaire d'un réseau de communication (ATM-KN) orienté paquets,
un format de données (IOM-2) orienté créneau temporel, formé d'une succession périodique de segments d'information (B1, B2, M, DI, C) individuels par rapport au canal étant prévu pour une transmission de données entre les dispositifs de communication, le format de données (IOM-2) présentant des segments d'information (DI) pour une transmission d'information de signalisation, des segments d'information (B1, B2) pour une transmission d'information de données utiles et des segments d'information (M, C) pour une transmission d'information spécifique au format de données,
**caractérisé en ce que**
les segments d'information (DI) prévus pour une transmission d'information de signalisation, les segments d'information (B1, B2) prévus pour une transmission d'information de données utiles et les segments d'information (M, C) prévus pour une transmission de l'information spécifique au format de données sont transmis par l'intermédiaire du réseau de communication (ATM-KN) orienté paquets dans des premiers, des seconds, respectivement des troisièmes paquets de données (ATMZ) prévus pour une transmission de données par l'intermédiaire du réseau de communication (ATM-KN) orienté paquets.

2. Procédé selon la revendication 1,
**caractérisé en ce que**
les segments d'information (M, C) prévus pour une transmission de l'information spécifique au format de données et les segments d'information (DI) prévus pour une transmission d'information de signalisation sont transmis ensemble dans les premiers paquets de données (ATM-2).

3. Procédé selon la revendication 2,
**caractérisé en ce que**
les premiers paquets de données (ATMZ) sont subdivisés en au moins deux paquets partiels (TP1, TP2), les segments d'information (M, C) prévus pour une transmission d'information spécifique au format de données étant transmis dans un premier paquet partiel (TP1) et les segments d'information (DI) prévus pour une transmission d'information de signalisation étant transmis dans un second paquet partiel (TP2).

4. Procédé selon la revendication 3,
**caractérisé en ce que**
les paquets partiels (TP1, TP2) présentent chacun un en-tête de cellule (SH) avec une identification de longueur, le nombre des données transmises dans un paquet partiel (TP1, TP2) respectif étant défini par l'identification de longueur.

5. Procédé selon l'une quelconque des revendications précédentes,
**caractérisé en ce que**
le format de données (IOM-2) orienté créneau temporel est le format de données IOM-2 spécifique standardisé.

6. Procédé selon l'une quelconque des revendications précédentes,
**caractérisé en ce que**
une transmission de données s'effectue par l'intermédiaire du réseau de communication (ATM-KN) orienté paquets sur la base du format de données ATM (Mode de Transfert Asynchrone).

7. Procédé selon la revendication 6,
**caractérisé en ce que**
les segments d'information (DI) prévus pour une transmission d'information de signalisation sont transmis dans des paquets de données (ATMZ) conçus selon une convention connue comme cinquième couche d'adaptation ATM AAL5 par l'intermédiaire du réseau de communication (ATM-KN) orienté paquets.

8. Procédé selon la revendication 6 ou 7,
**caractérisé en ce que**
les segments d'information (B1, B2) prévus pour une transmission d'information de données utiles sont transmis dans des paquets de données (ATMZ) conçus selon une convention connue comme première couche d'adaptation ATM AAL1 par l'intermédiaire du réseau de communication (ATM-KN) orienté paquets.

9. Procédé selon l'une quelconque des revendications précédentes,
**caractérisé en ce que**
les segments d'information (DI) prévus pour une transmission d'information de signalisation sont transmis par une liaison fixe existante du réseau de communication (ATM-KN) orienté paquets.

10. Procédé selon l'une quelconque des revendications 1 à 8,
**caractérisé en ce que**,
les segments d'information (DI) prévus pour une transmission d'information de signalisation sont transmis par une liaison établie individuellement pour cette transmission de données entre les dispositifs de communication par l'intermédiaire du réseau de communication (ATM-KN) orienté paquets.
